# EUROPÄISCHE PATENTSCHRIFT

(11) **EP 1 313 599 B1**
(45) Veröffentlichungstag und Bekanntmachung des Hinweises auf die Patenterteilung: **25.02.2009**
(21) Anmeldenummer: 01901161.8
(22) Anmeldetag: 18.01.2001
(51) Int. Cl.: B29B 9/10, B01J 2/04, C08G 63/88, C08J 3/12

(54) **VERFAHREN UND VORRICHTUNG ZUM HERSTELLEN KUGELFÖRMIGER PARTIKEL AUS EINER POLYMERSCHMELZE**
METHOD AND DEVICE FOR PRODUCING SPHERICAL PARTICLES FROM A POLYMER MELT
PROCEDE ET DISPOSITIF POUR FABRIQUER DES PARTICULES SPHERIQUES A PARTIR DE POLYMERE FONDU

(30) Priorität: 29.08.2000 DE 10042476
(43) Veröffentlichungstag der Anmeldung: 28.05.2003
(73) Patentinhaber: Bühler AG, 9240 Uzwil (CH)
(72) Erfinder: GEIER, Rudolf, 45130 Essen (DE); JÜRGENS, Theodor, 44581 Castrop-Rauxel (DE)
(74) Vertreter: Frommhold, Joachim
(86) Internationale Anmeldenummer: PCT/EP2001/000518
(87) Internationale Veröffentlichungsnummer: WO 2002/018113

(56) Entgegenhaltungen:
- EP-A- 0 880 995
- DE-A- 19 801 832
- DE-A- 19 849 485
- GB-A- 1 251 093
- US-A- 2 714 224
- US-A- 3 544 525
- US-A- 5 766 521

## Beschreibung

Die Erfindung bezieht sich auf ein Verfahren gemäss dem Oberbegriff von Anspruch 1 zum Herstellen kugelförmiger Partikel aus einer Polymer- bzw. Polymerschmelze, insbesondere aus polyfunktionellen Carbonsäuren und Alkoholen, wie PET- oder PBT-Partikeln, wobei ein aufgeschmolzenes Prepolymer bzw. Prekondensat bzw. nicht Fäden ziehendes Polymer mittels einer Verstopfungsdüse zu Tropfen vertropft wird, die Tropfen in einem Fallturm im Gegenstrom mit einem Gas zur zumindest teilweisen Kristallisation beaufschlagt werden und vorzugsweise sodann zu einer Nachkondensationsstufe transportiert werden.

Ferner nimmt die Erfindung Bezug auf eine Vorrichtung gemäss dem Oberbegriff von Anspruch 19 zum Herstellen von kugelförmigen Partikeln aus Prepolymer- bzw. Polymer, insbesondere aus polyfunktionellen Carbonsäuren und Alkoholen, wie PET- oder PBT-Partikeln, umfassend zumindest eine schmelzflüssiges Propolymer- bzw. Polymer vertropfende Düseneinrichtung, einen dieser nachgeordneten Fallturm, der über zumindest eine bodenseitige Gaseintrittsöffnung und zumindest eine düseneinrichtungsseitige Gasaustrittsöffnung in einem Gaskreislauf angeordnet ist, eine dem Fallturm nachgeordnete Transporteinrichtung für zumindest in dem Fallturm vorkristallisierte Partikel sowie eine der Transporteinrichtung nachgeordnete Kristallisationsstufe.

Zur Herstellung von PET-Granulat ist es bekannt, ein Prekondensat nach der Veresterung bzw. Umesterung und Prepolykondensation von Äthylenglykol bzw. Butandiol im PBT-Prozess und Terephthalsäure einem mit Unterdruck beaufschlagtem Reaktor zuzuführen. Hierdurch soll einerseits die Viskosität des weitgehend flüssigen und kurzkettigen Polymers erhöht und andererseits freiwerdendes Äthylenglykol bzw. Butandiol der Veresterung bzw. Umesterung wieder zugeführt werden. Nach der Reaktorbehandlung wird das Polykondensat in Wasser abgekühlt und zu Granulat geschnitten, um zylindrische Pellets zu erhalten, die weitgehend amorph sind. Allerdings ist der Nachteil gegeben, dass die Enden Ansätze aufweisen, die abbrechen und somit zu einer Staubentwicklung führen können. Nachteil des bekannten Verfahrens ist es des Weiteren, dass die Pellets nach ihrer Granulierung in einem weitgehend amorphen Zustand vorliegen, der in einer nachgeschalteten getrennten Behandlungsstufe eine Teilkristallisierung erforderlich macht. Ferner stört der anlagentechnische und energetische Aufwand, da besondere Behandlungsstufen wie unterdruckbeaufschlagte Reaktorstufe und Teilkristallisation erforderlich sind.

Um diese Nachteile zu vermeiden, wird nach der DE 198 49 485 A1 vorgeschlagen, dass schmelzflüssiges Prekondensat einem Fallturm mit einer im Kopfbereich vorhandenen Verteilertropfdüse zugeführt wird, wobei das aus der Verteilertropfdüse austretende Prekondensat in dem Fallturm im Gegenstrom einem Inertgas wie Stickstoff ausgesetzt wird. Hierdurch wird die Fallgeschwindigkeit bei gleichzeitiger Beschleunigung einer Kristallisation der Tropfen reduziert. Die am Boden des Fallturms austretenden Partikel können als getrocknete und teilkristallisierte Pellets sodann einer Nachkondensation bzw. SSP zugeführt werden.

um aus Kunststoff bestehende Kugeln gleichmässiger Geometrie herzustellen, wird nach der DE 43 38 212 C2 vorgeschlagen, dass Kunststoff in schmelzflüssiger Konsistenz durch Schwingungsanregung einer Düseneinrichtung vertropft wird, wobei die so hergestellten Tropfen in einer Flüssigkeit abgekühlt werden.

Die DE198 01 832 A1 offenbart ein Verfahren zum Herstellen kugelförmiger Teile nahezu gleichen Durchmessers. Das zu Kugeln zu verarbeitende Material wird dabei in einem Schmelztiegel aufgeschmolzen, und ein Schmelzstrahl wird durch eine Düse ausgeschleust. Die Positionierung des Materials erfolgt durch einen vor der Düsenöffnung hin- und herbewegten Schieber, der die entsprechenden Positionen von dem Schmelzestrahl abteilt.

Der vorliegenden Erfindung liegt das Problem zugrunde, ein Verfahren und eine Vorrichtung der eingangs genannten Art so weiterzubilden, dass grosstechnisch aus Polymeren bestehende Kugeln gewünschter Grösse und gleichmässiger Geometrie herzustellen sind. Gleichzeitig soll die Produktion der Partikel energetisch günstiger und anlagentechnisch einfacher und somit kostengünstiger sein. Ferner soll eine schnellere Aufschmelzung der Kugeln möglich sein.

Erfindungsgemäss wird das Problem gemäss Anspruch 1 durch ein Verfahren der eingangs genannten Art im wesentlichen dadurch gelöst, dass das Polymer bzw. die Prepolymer- bzw. Polymerschmelze mittels einer in Schwingung versetzten Düsenplatte und/oder durch direkte Schwingungsanregung der Prepolymer- bzw. Polymerschmelze Tropfen vertropft wird, die mit Luft als dem Gas in Gegenstrom beaufschlagt werden, wobei die Tropfen unmittelbar nach Verlassen der Düsenplatte einer laminaren Luftströmung ausgesetzt werden, und dass die Luft dem Fallturm bei einer Temperatur T₁ mit T₁ < 160° und oberhalb vom Glaspunkt der zu vertropfenden Prepolymer- bzw. Polymerschmelze zugeführt wird. Insbesondere wird die Lufttemperatur mit einer Temperatur T₂ mit T₂ ≤150° C, insbesondere T₂ ≤110° C zugeführt.

Die erfindungsgemässe Vorrichtung gemäss Anspruch 19 zeichnet sich dadurch aus, dass bei der Vorrichtung der eingangs genannten Art die Anlage eine Düsenplatte mit auf einer Fläche verteilten Düsen aufweist, dass der Fallturm in dem Luft führenden Kreislauf angeordnet ist und einen Querschnitt aufweist, der zumindest doppelt so gross wie die Fläche ist, und dass die Anlage einen Schwingungsgeber umfasst, über den die Düsenplatte und/oder das schmelzflüssige Prepolymer bzw. Polymer unmittelbar in Schwingung anregbar ist.

Für die Herstellung von PBT-Kugeln sollte eine maximale Erwärmung der Luft bis zu einer Temperatur T₁ mit T₁ ≤140°C erfolgen. Dabei wird Luft mit einer Temperatur T₂ mit T₂ ≤130° C, insbesondere T₂ ≤80° C zugeführt. Vorzugsweise wird jedoch die Luft dem Fallturm mit einer Temperatur T₁ zugeführt, die oberhalb vom Glaspunkt des zu vertropfenden Polymers liegt.

Des Weiteren wird die Luft im unteren Bereich, insbesondere im Bodenbereich des Fallturms derart eingeleitet, dass die Tropfen im unteren Bereich des Fallturms mit einer höheren Geschwindigkeit als im oberen Bereich angeströmt werden.

Unabhängig hiervon sollte die Lufteintrittstemperatur derart eingestellt werden, dass einerseits oxidative Schädigungen des vertropften Polymers vermieden werden und andererseits eine hinreichende Verfestigung bzw. Vorkristallisation gegeben ist.

Damit die in den Fallturm eintretende Luft im erforderlichen Umfang Reaktionssubstanzen wie Äthylenglykol bzw. Butandiol oder Wasser aufnehmen kann, sollte die Luft beim Eintritt in den Fallturm einen niedrigen Taupunkt aufweisen, vorzugsweise im Bereich zwischen -10° C und -40° C.

Um in der den Fallturm durchströmenden Luft gelöste Reaktionsprodukte abzuscheiden und wiederverwenden zu können, sieht eine Weiterbildung der Erfindung vor, dass eine Teilmenge - etwa 10 % - 30 % - der den Kreislauf durchströmenden Luft entnommen und einem Sprühkreislauf zugeführt wird, in dem Reaktionsprodukte entfernt werden. Insbesondere ist vorgesehen, in den Reinigungskreislauf frisches und kaltes Äthylenglykol bzw. Butandiol zu sprühen, wodurch Reaktionssubstanzen wie Äthylenglykol bzw. Butandiol, Oligomere und Wasser, die in die trockene Luft diffundiert sind, aus dem Luftkreislauf auskondensiert und als wertvolle Rohsubstanzen genutzt werden können, wie zum Beispiel das Äthylenglykol bzw. Butandiol zur Veresterung beim Prozess mittels TPA bzw. zur Umesterung bei einem Prozess mittels DMT. Die so gereinigte Luft behält ihren niedrigen Taupunkt und kann wiederum dem den Fallturm durchströmenden Kreislauf zugeführt werden.

Zum Entfernen von Acetaldehyd bzw. TIEF (Tetrahydroforan) beim PBT-Prozess, das in einem entsprechenden Äthylenglykol- bzw. Butandiolsprühkreislauf nicht entfernt werden können, wird eine mit Acetaldehyd beladene Luftmenge der Ansaugluft einer Wärmeträgeranlage wie Ofen beigemischt und somit verbrannt. Die verbrannte Luftmenge wird fortwährend, insbesondere kontinuierlich durch eine gleiche Menge an Luft ersetzt. Hierdurch wird der Bedarf an Brennmitteln wie Heizgas bzw. Öl reduziert.

Mit dem Reinigungskreislauf kann auch eine nachgeschaltete Vorkristallisationsstufe, die bei der Verarbeitung von Comonomeren besonders wichtig ist, einbezogen werden, die ebenfalls mit trockner Luft betrieben wird.

Dadurch, dass die nicht Fäden ziehende Polymerschmelze bzw. das Vor- bzw. Prekondensat mit einer in Schwingung versetzten Düsenplatte vertropft wird, ergeben sich regelmäßige und gleichgroße bzw. gleichförmige Tröpfchen. Diese fallen zunächst durch einen Bereich des Fallturms, in dem im Wesentlichen eine laminare Strömung herrscht. Somit kann eine hinreichende äußere Verfestigung der Tröpfchen erfolgen, so dass die Gefahr einer Kollision minimiert wird, wodurch andernfalls ein Verkleben von Tropfen erfolgen würde.

Anstelle einer Schwingungsanregung der Düsenplatte oder ergänzend hierzu kann die Prepolymer- bzw. Polymerschmelze mittels zum Beispiel eines Schwingungsgebers in Schwingung angeregt und vertropft werden.

Des Weiteren ist vorgesehen, dass der Fallturm einen Querschnitt; insbesondere Durchmesser aufweist, der erheblich größer ist als die Düsenplatte in Bezug auf eine Fläche wie im Wesentlichen Kreisfläche, auf der die Austrittsöffnungen zum Vertropfen der Prepolymer- bzw. Polymerschmelze angeordnet sind. Ferner sollte der Fallturm in Bezug auf seine Innenwandung aus einem Material bestehen bzw. mit einem solchen beschichtet sein, welches ein Anhaften von Tropfen ausschließt bzw. verhindert. Als geeignetes Material ist Teflon® zu nennen.

Um zusätzlich die Verweilzeit der zu einer Kugelform gebildeten Tropfen zu erhöhen, wird durch Einbauten in dem Fallturm eine Erhöhung der Luftgeschwindigkeit bewirkt. Die Einbauten führen zu einer Querschnittsveränderung des Fallturms und somit zu einer entsprechenden Änderung der Luftgeschwindigkeit.

Fallturmbodenseitig werden die Partikel über eine Durchtrittsöffnungen aufweisende geneigte Ebene zu einer Trenneinrichtung wie Übergrößenseparator geführt, in der mögliche Agglomerate aussortiert und der Ausgangsschmelze bzw. deren Vorprodukte zugeführt wird. Da der entsprechende agglomerierte Partikel noch eine geringe Viskosität aufweist, ist ein schnelles und gutes Auflösen in einer Vorkondensationsstufe möglich.

In Bezug auf die zu dem Übergrößenseparator führenden geneigten Ebene, die als Sieb oder perforiertes Blech oder als Windsichter o.ä. ausgebildet sein kann, ist anzumerken, dass diese mit trockener Luft durchströmt wird, wobei die Luftgeschwindigkeit so gewählt ist, dass die Partikel über der Ebene bzw. deren Öffnungen schweben und oszillieren. Hierdurch wird verhindert, dass Partikel verkleben können. Zusätzlich wird die Verweilzeit, in der die Partikel mit Luft beaufschlagt werden, erhöht.

Nach dem Übergrößenseparator können die Partikel einem Kristallisator zugeführt werden, der ebenfalls mit in einem Kreislauf geführter trockener Luft betrieben wird. In der Luft angereicherte Reaktionssubstanzen können sodann in zuvor beschriebener Weise in einem Sprühkreislauf abgeschieden bzw. nicht abscheidbare Substanzen einem Wärmeträger zugeführt werden.

Eine Anlage zur Herstellung von kugelförmigen Partikeln aus einer Polymerschmelze, insbesondere aus polyfunktionellen Carbonsäuren und Alkoholen, wie PET- oder PBT-Partikeln der eingangs genannten Art zeichnet sich dadurch aus, dass die Düseneinrichtung eine in Schwingung versetzte Düsenplatte bzw. eine Düsenplatte mit direkt auf die Schmelze wirkendem Schwingungsgeber mit Düsen aufweist, die auf einer kreisförmigen Fläche mit einem Durchmesser D_{d} verteilt angeordnet sind, und dass der Fallturm in dem Luft führenden Kreislauf angeordnet und einen Durchmesser D_{f} aufweist, der zumindest doppelt so groß wie der Durchmesser D_{d} ist. Insbesondere verhalten sich die Durchmesser der wirksamen Fläche der Düsenplatte zum Fallturm wie 1:2 bis 1:10, insbesondere in etwa 1:5,5. Des Weiteren ist der Fallturm innenwandig mit einem Antihaftmaterial ausgekleidet oder weist ein solches auf. Insbesondere handelt es sich bei dem Material um Teflon®.

Um mit konstruktiv einfachen Mitteln die den Fallturm im Gegenstrom zur Fallrichtung der Tropfen durchströmenden Luft in ihrer Geschwindigkeit einzustellen, sieht eine Weiterbildung der Erfindung vor, dass der Fallturm im Bereich der Lufteintrittsöffnung den Fallturm in seinem Querschnitt veränderte Einbauten aufweist. Hierbei kann es sich zum Beispiel um Kegel- oder Pyramidenstümpfe handeln, die außenseitig mit Teflon® oder einem anderen geeigneten ein Anhaften verhinderndes Material aufweisen.

Die Luftaustrittsöffnung selbst ist im Abstand zur Düsenplatte derart angeordnet, dass von der Düsenplatte vertropfte Partikel unmittelbar nach dem Austritt aus der Düsenplatte einer im Wesentlichen laminaren Luftströmung ausgesetzt sind.

Im Bodenbereich des Fallturms ist eine Durchtrittsöffnung aufweisende schräg verlaufende Ebene wie Sieb oder Lochblech vorgesehen, die von trockener Luft derart durchströmt ist, dass die Partikel schwebend und/oder oszillierend entlang der Ebene zumindest im Bereich der Durchbrechungen bewegbar sind. Die die Durchtrittsöffnung aufweisende Ebene selbst führt zu einem Übergrößenseparator, dem eine mit trockener Luft betriebene Kristallisationsstufe nachgeordnet ist.

In dem Übergrößenseparator abgetrennte Partikelagglonerate können über eine zu der Düsenplatte vorgeordneten Vorkondensationsstufe führende Leitung dem Prozess wieder beigegeben werden.

Des Weiteren umfasst die Vorrichtung eine Reinigungsstufe mit einem Sprühkreislauf, der mit dem den Fallturm einschließenden ersten Luftkreislauf bzw. einen die Kristallisationsstufe einschließenden zweiten Luftkreislauf verbunden ist. Ferner gehen in von der Reinigungsstufe Verbindungen einerseits zu einer der Vorkondensationsstufe vorgeordneten Veresterungs bzw. Umesterungsstufe und andererseits zu einer Verbrennungseinrichtung aus.

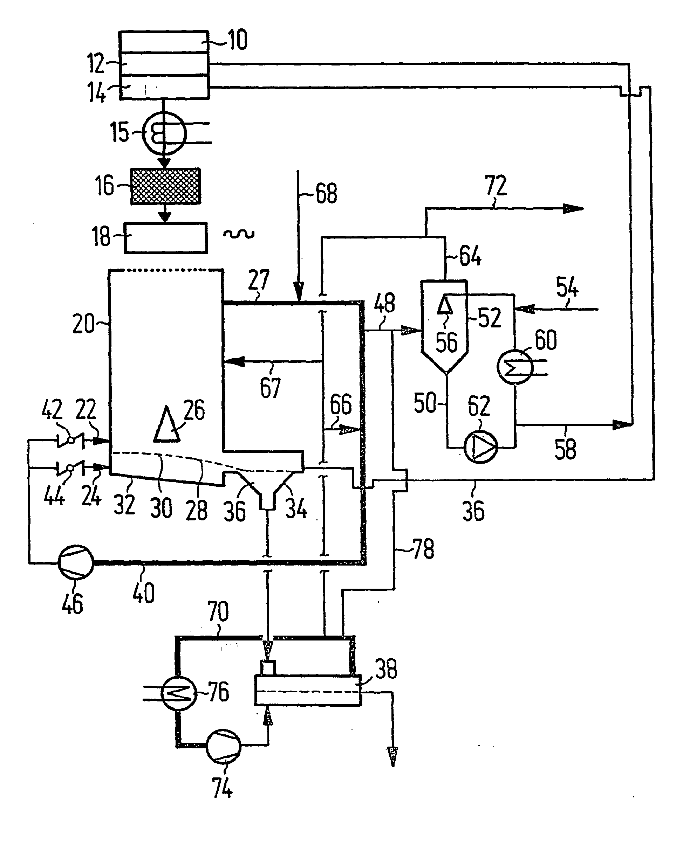

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Auch wenn die erfindungsgemäße Lehre insbesondere zum Vertropfen von Polyester bestimmt ist, soll hierdurch eine Einschränkung der erfindungsgemäßen Lehre nicht erfolgen. Vielmehr ist diese ganz allgemein für Polymere anwendbar. Bevorzugte Materialien sind der US 5,633,018 zu entnehmen.

Insbesondere gilt die erfindungsgemäße Lehre auch zur Herstellung von
- PET mittels Veresterung von Äthylenglykol und PTA,
- PET mittels Umesterung von Äthylenglykol und DMT (Di-Methyl-Terephtalate),
- PBT mittels Veresterung von Butandiol und PTA,
- PBT mittels Umesterung von Butandiol und DMT.

Des Weiteren besteht die Möglichkeit, dem Ausgangsprodukt einen Katalysator in Form einer Verbindung auf der Basis von Titanoxid beizugeben, um die Polykondensationsgeschwindigkeit zu erhöhen, ohne gleichzeitig in Kauf zu nehmen, dass die hergestellten Pellets eine unerwünschte Gelbfärbung erfahren. Ursächlich hierfür ist, dass der Herstellungsprozess nach der Erfindung im Vergleich zum Stand der Technik bei relativ niedrigen Temperaturen stattfindet.

In der einzigen Figur ist rein prinzipiell ein Anlagenschema zum Herstellen von kugelförmigen Partikeln aus Polymer, insbesondere aus polyfunktionellen Carbonsäuren und Alkohole, insbesondere zur Herstellung von kugelförmigen PET (Polyäthylenterephtalat)-Pellets, dargestellt. Zum kugelförmige Pellets herzustellen, wird von einer Pastenaufbereitungsstufe 10, einer Veresterungsstufe 12 für Terephthalsäure und Äthylenglykol und einer sich anschließenden unterdruckbeaufschlagten Prepolykondensationsstufe 14 ein Polyestervorkondensat mit einer Produkttemperatur von in etwa 260° - 280° C und einer Intrinsic-Viskosität von 0,1 - 0,4 über einen Wärmetauscher 15 einem Filter 16 einer Düsenplatte 18 zugeführt, über die das gut filtrierte Vorkondensat vertropft wird. Werden PBT-Pellets hergestellt, weist das Polyesterkondensat eine Produkttemperatur zwischen 210° C und 240° C und eine Intrinsic-Viskosität von 0,3 bis 0,6 auf.

Die Düsenplatte 18 ist in Vibrationsschwingung versetzbar und weist insbesondere auf konzentrischen Kreisen angeordnete Austrittsöffnungen auf, die eine Fläche mit einem Durchmesser D_{d} von zum Beispiel 300 mm aufweist. Die die Öffnungen bzw. Düsen aufweisende Düsenplatte 18 kann federnd in einer Halterung eingesetzt sein, wobei die Düsenplatte selbst mit einem Schwingerreger verbunden ist. Der Schwingerreger, bei dem es sich um einen elektromagnetischen Schwingerreger handeln sollte, geht von einer Tragkonstruktion aus, um die Düsenplatte in Schwingung versetzen zu können. Frequenzen, mit denen die Düsenplatte in Schwingung versetzt werden kann, können im Bereich zwischen 200 und 2000 Hz liegen. Die Durchmesser der Öffnungen bzw. Düsen sollten im Bereich zwischen 0,2 und 0,8 mm liegen. Ferner sollte das Polyestervorkondensat mit einem Überdruck von zum Beispiel 0,2 bis 1,0 bar der Düsenplatte 18 zugeführt werden. Auch ist die Düsenplatte 18 gleichmäßig beheizt, wobei insbesondere eine Temperatur im Größenbereich zwischen 220 und 250° - beim PBT zwischen 190° C und 220° C - gewählt ist.

Ergänzend oder alternativ kann zum Vertropfen der Schmelze diese mittels eines Schwingungsgebers in Schwingung angeregt werden.

Dadurch, dass die Düsenplatte 18 in Schwingung versetzt wird, ist sichergestellt, dass das aufgeschmolzene Prepolymer regelmäßig in gleichgroße und gleichförmige Partikeln in einem Fallturm 20 vertropft werden, der einem Prill-Turm gleichkommt. Die Länge des Fallturms 20 kann im Bereich zwischen 10 und 30 m, insbesondere im Bereich von 20 m liegen. Technisch sind selbstverständlich Turmhöhen von mehr als 30 m möglich. Bei einem Durchmesser D_{d} der wirksamen Fläche der Düsenplatte 18 von in etwa 300 mm sollte der Fallturm 20 einen Durchmesser von 1600 mm aufweisen. Ferner ist der Fallturm 20 innenseitig mit einem Antihaftmittel wie insbesondere Teflon® auszukleiden bzw. besteht aus diesem Material, um sicherzustellen, dass die Düsenplatte 18 verlassende Tropfen nicht anhaften können.

Durch die Schwingungsanregung der Düsenplatte 18 bzw. unmittelbare Schwingungsanregung der Schmelze und der gleichmäßigen Verteilung der Düsen auf der Kreisfläche wird sichergestellt, dass die Tropfen ohne Kollision über eine Strecke in den Fallturm 20 fallen, in der eine Aushärtung der Oberfläche der Tropfen in einem Umfang erfolgt, dass ein Zusammenbacken von Tropfen unterbleibt. Gleichzeitig stellt sich aufgrund der Kohäsionskräfte eine Kugelform ein.

Zur Vermeidung von Kollisionen ist des Weiteren vorgesehen, dass die Tropfen im Fallturm 20 unmittelbar nach Verlassen der Düsenplatte 18 in einen im Wesentlichen laminaren Anteil einer Luftströmung fallen, der im Gegenstrom zur Fallrichtung der Tropfen verläuft. Dieser Luftgegenstrom dient zur weiteren Verfestigung der Kugeln und deren Vorkristallisation, wobei die Einströmgeschwindigkeit der nach unten fallenden bzw. schwebenden Partikel in Abhängigkeit von deren Durchmesser eingestellt wird.

Zur Erzeugung des Gegenstroms befinden sich im Bodenbereich des Fallturms 20 Lufteintrittsöffnungen 22, 24 und beabstandet zur Düsenplatte 18 eine Luftaustrittsöffnung 27.

Des Weiteren befinden sich im Bodenbereich des Fallturms 20 den Querschnitt verändernde Einbauten 26 zum Beispiel kegelförmiger oder kegelstumpfförmiger Geometrie, wodurch die Strömungsgeschwindigkeit im Bodenbereich des Fallturms 20 im Vergleich zum Kopfbereich mit der Folge erhöht wird, dass die Verweilzeit der in den Bodenbereich gelangenden und vorkristallisierien bzw. vorgehärteten Tropfen erhöht wird. Durch die Einbauten 26 kann die Luftgeschwindigkeit im Bodenbereich eine Geschwindigkeit zwischen 3 und 7 m pro sek. eingestellt werden. Die Einbauten 26 selbst sollten zumindest außenseitig ein Antihafhnaterial wie Teflon® aufweisen oder aus einem solchen bestehen.

Ferner ist vorgesehen, dass die in den Bodenbereich über die Lufteintrittsöffnung 22, 24 einströmende Luft, die den herabfallenden Partikeln entgegenströmt, eine Ausgangstemperatur zwischen 80° C und 160° C - bei PBT zwischen 60° C und 120° C - aufweist, wobei die Lufttemperatur im Eintritt oberhalb des Glaspunktes des Vorkondensats (ca. 70° C - 80° C bei PET und 35° C - 50° C beim PBT -) liegen sollte. Ein Temperaturwert von 160° C bei PET bzw. 120° C für PBT sollte jedoch nicht überschritten werden, um eine oxidative Schädigung der Partikel zu vermeiden, wobei gleichzeitig jedoch eine ausreichende Verfestigung bzw. Vorkristallisation gewährleistet sein soll. Auch sollte die eintretende Luft zur Aufnahme von Äthylenglykol, Wasser etc. beim Eintritt in den Fallturm 20 einen niedrigen Taupunkt aufweisen, vorzugsweise zwischen -10° C und -40° C.

Im Bodenbereich des Fallturms 20 verläuft eine Durchtrittsöffnungen 28 aufweisende geneigte Ebene 30 in Form zum Beispiel eines Siebes oder eines perforierten Blechs. In den Raum zwischen dem Boden 32 des Fallturms 20 und der geneigt verlaufenden Ebene 30 mündet eine der Lufteintrittsöffnungen, im Ausfuhrungsbeispiel die Lufteintrittsöffnung 24. Die die Durchbrechungen 28 durchströmende trockene Luft 24 ist in ihrer Geschwindigkeit so gewählt, dass die zu der Ebene 30 gelangenden Partikel zumindest im Bereich der Durchbrechungen 28 schweben bzw. oszillieren. Durch diese Maßnahmen wird zusätzlich ein Verkleben von Partikeln verhindert. Gleichzeitig wird die Verweilzeit der Partikel in dem von der Luft durchströmten Fallturm 20 erhöht.

Über die geneigte Ebene 30, die quasi als Transporteinrichtung dient, gelangen die Partikel bzw. Pellets zu einem Übergrößenseparator 34, durch den Agglomerate von Partikeln abgetrennt werden, um über eine Leitung 36 erneut der Vorkondensationsstufe 14 zugeleitet zu werden. Aufgrund der noch geringen Viskosität lassen sich eventuell auftretende Agglomerate problemlos in der Vorkondensationsstufe 14 auflösen und können somit dem Prozess wieder zugeführt werden.

Von dem Übergrößenseparator 34 bzw. dessen trichterförmigem Bodenbereich 36 werden die Pellets einer Krisiallisationsstufe 38 zugeführt, die ebenfalls mit trockener Luft betrieben wird. Von der Kristallisationsstufe 38 können die Partikel zu einer üblichen SSP-Nachkondensationsstufe gelangen, welche insbesondere unter Unterdruck betrieben wird.

Wie die Prinzipdarstellung der einzigen Figur verdeutlicht, wird die den Fallturm 20 durchsetzende Luft in einem - ersten - Kreislauf 40 gefördert, wobei den Eintrittsöffnungen 22, 24 Klappen 42, 44 zur Luftmengenregulierung vorgeschaltet sind. Ferner befindet sich ein Gebläse 46 vor den Steuerklappen 42, 44.

Die über die Austrittsöffnung 27 entnommene Luft ist mit Reaktionsprodukten wie Äthylenglykol - bzw. Butandiol -, Wasser, Oligomere oder Acetaldehyd - bzw. Tetrahydrofuran -beladen, die aus dem vertropften Prekondensat bzw. aufgeschmolzen Prepolymer stammen. Um die Reaktionsprodukte, soweit diese wiederverwendbar sind, dem Herstellungsprozess wieder zuzuführen, wird eine Teilmenge dem Kreislauf 40 über eine Leitung 48 einem - zweiten - Kreislauf 50, einem Sprühkreislauf zugeführt, der einen Sprühkondensator 52 umfasst, in den frisches und kaltes Äthylenglykol bzw. Butandiol, das über eine Leitung 54 zugeführt wird, über eine Sprühvorrichtung 56 versprüht wird_ Durch diese Maßnahme werden aus dem Kreislauf 50 Reaktionssubstanzen wie Äthylenglykol, Butandiol, Oligomere, Wasser etc. auskondensiert, die als Rohsubstanzen wiederverwendet und über eine Leitung 58 der Veresterungs- bzw. Umesterungsstufe 12 zugeführt werden können. Zur Beschleunigung der Kondensation ist in dem Kreislauf 50 ein Wärmetauscher 60 vorhanden, durch den die Temperatur der den Kreislauf 50 durchströmenden Luft optimal eingestellt wird. Zum Fördern der Kreislaufflüssigkeit selbst ist eine Pumpe 62 vorhanden.

Der Anteil der aus dem ersten Kreislauf 40 ausgeschleusten Luft beträgt vorzugsweise zwischen 10 % und 30 %.

Die den Sprühkreislauf 50 über eine Leitung 64 verlassende Luft ist gereinigt und besitzt einen niedrigen Taupunkt und kann über eine Leitung 66 dem den Fallturm 20 durchströmenden Kreislauf 40 zugeführt werden. Aufgrund der niedrigen Temperatur der den Sprühkreislauf 50 über die Leitung 66 verlassenden Luft und deren niedrigen Taupunkt wird erreicht, dass die Temperatur in dem Kreislauf 50 auf eine gewünschte Eintrittstemperatur im Bodenbereich des Fallturms 20 eingestellt ist.

Da sowohl in dem Fallturm 20 als auch in der nachgeschalteten Vorkristallisationsstufe 38 geringe Mengen an Acetaldehyd bzw. TEE (Tetrahydroforan) gebildet sind, die nicht in dem Sprühkreislauf 50 kondensiert werden können, werden über einen Anschluss 68 geringe Mengen an Luft dem ersten Kreislauf 40 zugeführt. Eine gleiche Menge an Luft wird einer den Sprühkreislauf 50 mit dem Kreislauf 40 des Fallturms 20 bzw. einem die Vorkristallisationsstufe 38 umfassenden dritten Kreislauf 70 verbindenden Leitung 64 über einen Anschluss 72 entnommen, um zwecks Verbrennung einer Wärmeträgeranlage beigemischt zu werden, wodurch der Bedarf an Fremdenergie wie Heizgas bzw. Öl reduziert werden kann.

Erwähntermaßen umfasst die Vorkristallisationsstufe 38, die insbesondere bei der Verarbeitung von Comonomeren notwendig ist, ebenfalls einen Kreislauf 70, in dem trockene Luft mittels eines Gebläses 74 gefördert wird. Die in den Kreislauf 70 strömende Luft kann des Weiteren über eine Heizeinrichtung 76 im gewünschten Umfang erwärmt werden. Der Kreislauf 70 ist entsprechend der zeichnerischen Darstellung über eine Leitung 78 mit dem Sprühkreislauf 50 verbunden, um Reaktionssubstanzen, mit denen die zirkulierende Luft angereichert ist, auszukondensieren und dem Veresterungs- bzw. Umesterungsprozess wieder zuführen zu können.

Eine der über die Leitung 78 abgeführten Luft entsprechenden Menge an Luft niedrigen Taupunkts wird über die Leitung 64 dem Kreislauf 70 wieder zugeführt.

Das Entfernen von Reaktionssubstanzen aus dem Kreislauf 70 ist allein aus ökonomischen Gründen von Vorteil, da sich aufgrund der noch relativ niedrigen Intrinsic-Viskosität noch relativ viel Äthylenglykol bzw. Butandiol in dem Luftkreislauf 70 befindet, so dass sich erwähntermaßen eine Auskondensation von Äthylenglykol bzw. Butandiol und dessen Rückführung in die Veresterungs- bzw. Umesterungsstufe 12 anbietet.

Zu den Temperaturwerten der den Fallturm 20 durchsetzenden Partikeln bzw. der Luftkreisläufte ist Folgendes anzumerken. Die Partikel verlassen die Düsenplatte mit einer Temperatur von ca. 230° beim PET- bzw. 190° C beim PBT-Prozess und erreichen im Mittenbereich des Fallturms 20 eine Temperatur von in etwa 180°. Im Übergrößenseparator 34 herrscht eine Temperatur von in etwa 160° C beim PET- bzw. 130° C beim PBT-Prozess.

Die über die Eintrittsöffnungen 22, 24 in den Fallturm 20 eintretende Luftmenge und - temperatur wird entsprechend dem Durchsatz eingestellt. Die der Austrittsöffnung 27 entnommene Luft weist einen Wert von in etwa ≤ 160° C bei einem PET- und ≤130° C bei einem PBT-Prozess auf. In dem zweiten die Sprühreinigung umfassenden Kreislauf 50 wird die Luft auf in etwa 20° abgekühlt und mit diesem Temperaturwert sowohl dem ersten Kreislauf 40 als auch dem zweiten Kreislauf 70 zugeführt.

Die unterhalb der die Funktion eines Wirbelbetts ausübenden geneigt verlaufenden Ebene 30 über die Eintrittsöffnung 24 zugeführte Luft sollte mit einer Temperatur zugeführt werden, bei der die Kristallisationsgeschwindigkeit für die herzustellenden Pellets optimal ist. Dies bedeutet bei der Herstellung von PET-Kugeln etwa 160° C und bei PBT-Pellets ≤ 130° C. Die über die oberhalb der Ebene 30 vorhandene Öffnung 22 zugeführte Luft sollte unterhalb der zuvor angegebenen Temperaturwerte liegen, da beim Durchströmen des Turmes 20 durch Wärmeübergang von den herabfallenden Tropfen eine Erwärmung erfolgt. Um insoweit eine Optimierung vorzunehmen, führt von der von dem Sprühkreislauf 50 ausgehenden Leitung 64 eine Verbindung 67 zu dem Turm, über die gereinigte Luft relativ niedriger Temperatur (in etwa 20 - 30° C) unmittelbar in den Turm 20 eingeleitet wird, wodurch die den Turm 20 durchströmende Luft insgesamt herabgesetzt wird. Somit kann im Bereich des Wirbelbetts 30 Luft gewünschter relativ hoher Temperatur zugeführt werden, ohne dass die optimale Kristallisationstemperatur innerhalb des Turms 20 überschritten wird, da erwähntermaßen kühlere Luft über die Leitung 67 zugemischt wird.

Mit dem erfindungsgemäßen Verfahren lassen sich gleichmäßige kugelförmige im engen Kornspektrum liegende Pellets herstellen. Bei einem Düsendurchmesser von 0,5 mm, einer Düsenplattenfrequenz von 1000 - 2000 Hz und einer Fallhöhe von 20 m lassen sich Kugelpellets mit einem Durchmesser von 0,8 mm gewinnen.

## Patentansprüche

1. Verfahren zum Herstellen kugelförmiger Partikel aus einer Polymerschmelze, insbesondere aus polyfunktionellen Carbonsäuren und Alkoholen, wie PET- oder PBT-Pellets, wobei ein aufgeschmolzenes Prepolymer bzw. Prekondensat bzw. nicht Fäden ziehendes Polymer mittels einer Vertropfungsdüse zu Tropfen vertropft wird, die Tropfen in einem Fallturm mit Gegenstrom mit einem Gas zur zumindest Teilkristallisation beaufschlagt werden und sodann zu einer weiteren Nachkristallisationsstufe transportiert werden, **dadurch gekennzeichnet, dass** das aufgeschmolzene Prepolymer mittels einer in Schwingung versetzten Düsenplatte und/oder durch direkte Schwingungsanregung des aufgeschmolzenen Prepolymers bzw. Polymers vertropft wird, dass so gebildete Tropfen mit Luft als dem Gas im Gegenstrom beaufschlagt werden, wobei die Tropfen unmittelbar nach Verlassen der Düsenplatte einer laminaren Luftströmung ausgesetzt werden, und dass die Luft dem Fallturm bei einer Temperatur T₁ mit T₁ < 160° C und oberhalb vom Glaspunkt der zu vertropfenden Prepolymer- bzw. Polymerschmelze zugeführt wird.

2. Verfahren nach Anspruch 1, **dadurch gekennzeichnet, dass** die Luft dem Fallturm mit einer Temperatur T₁ derart zugeführt wird, dass die Luft durch Wärmeübergang von den Tropfen bis maximal einer Temperatur T₂ ≤210° C erwärmt wird.

3. Verfahren nach Anspruch 1 oder 2, **dadurch gekennzeichnet, dass** die Luft dem Fallturm mit einer Temperatur T₁ ≤120° C zugeführt wird.

4. Verfahren nach Anspruch 1 oder 2, **dadurch gekennzeichnet, dass** bei der Herstellung von PET-Pellets die Luft dem Fallturm mit einer Temperatur derart zugeführt wird, dass die Luft durch Wärmeübertrag von den Tropfen bis maximal einer Temperatur T₂ ≤160° C erwärmt wird.

5. Verfahren nach Anspruch 1 oder 2, **dadurch gekennzeichnet, dass** bei der Herstellung von PBT-Pellets die Luft dem Fallturm mit einer Temperatur derart zugeführt wird, dass die Luft durch Wärmeübertrag von den Tropfen bis maximal einer Temperatur T₂≤140° C erwärmt wird.

6. Verfahren nach Anspruch 1 oder 2, **dadurch gekennzeichnet, dass** bei der Herstellung des Prepolymers bzw. Prekondensats ein polykondensationsgeschwindigkeitserhöhender Katalysator auf der Basis von Titanoxid zugeben wird.

7. Verfahren nach Anspruch 1 oder 2, **dadurch gekennzeichnet, dass** die Luft im unteren Bereich, insbesondere im Bodenbereich des Fallturms diesem zugeführt wird.

8. Verfahren nach zumindest einem der vorhergehenden Ansprüche, **dadurch gekennzeichnet, dass** die Tropfen im unteren Bereich des Fallturms mit einer höheren Geschwindigkeit als im oberen Bereich angeströmt werden.

9. Verfahren nach zumindest einem der vorhergehenden Ansprüche, **dadurch gekennzeichnet, dass** dem Fallturm Luft einer Taupunkttemperatur Tₜ mit insbesondere -10° C ≤Tₜ ≤-40° C zugeführt wird.

10. Verfahren nach zumindest einem der vorhergehenden Ansprüche, **dadurch gekennzeichnet, dass** die Luft in einem den Fallturm einschliessenden ersten Kreislauf zugeführt wird, dass eine Teilmenge dem ersten Kreislauf entnommen und einem zweiten Kreislauf zugeführt wird, in dem Reaktionssubstanzen wie Äthylenglykol bzw. Butandiol, Oligomere und/oder Wasser entfernt werden.

11. Verfahren nach zumindest einem der vorhergehenden Ansprüche, **dadurch gekennzeichnet, dass** der zweite Kreislauf ein Sprühkreislauf ist, in dem Äthylenglykol bzw. Butandiol versprüht wird, wobei in dem zweiten Kreislauf auskondensierte Reaktionssubstanzen einer der Düsenplatte vorgeordneten Veresterungs- oder Umesterungsstufe zugeführt werden.

12. Verfahren nach zumindest einem der vorhergehenden Ansprüche, **dadurch gekennzeichnet, dass** dem ersten und/oder zweiten Kreislauf entnommene Luft mit in diesem enthaltenen in dem zweiten Kreislauf unkondensierbaren Reaktionsprodukten wie Acetaldehyd bzw. Tetrahydroforan einer Wärmeübertragungsanlage zugeführt wird.

13. Verfahren nach zumindest einem der vorhergehenden Ansprüche, **dadurch gekennzeichnet, dass** die zumindest teilkristallisierten Tropfen im Bodenbereich des Fallturms über eine geneigte von trockener Luft durchströmte Durchtrittsöffnungen aufweisende Ebene aus dem Fallturm entfernt werden.

14. Verfahren nach zumindest einem der vorhergehenden Ansprüche, **dadurch gekennzeichnet, dass** die zu den Kugeln zumindest teilkristallisierten Tropfen schwebend und/oder oszillierend entlang der geneigt verlaufenden Ebene bzw. zumindest im Bereich der in dieser vorhandenen Durchtrittsöffnungen transportiert werden.

15. Verfahren nach zumindest einem der vorhergehenden Ansprüche, **dadurch gekennzeichnet, dass** die zu den Kugeln zumindest teilkristallisierten Tropfen nach verlassen der geneigten Ebene klassiert werden.

16. Verfahren nach zumindest einem der vorhergehenden Ansprüche, **dadurch gekennzeichnet, dass** die zu Kugeln zumindest teilkristallisierten Tropfen von der geneigt verlaufenden Ebene einem Übergrössenseparator gelangen und dort abgeschiedene Partikel einer Vorkondensationsstufe für das Prepolymer zugeführt werden.

17. Verfahren nach zumindest einem der vorhergehenden Ansprüche, **dadurch gekennzeichnet, dass** die Partikel nach Durchsetzen des Übergrössenseparators einer Vorkristallisationsstufe zugeführt werden, die in einem von trockener Luft durchströmten dritten Kreislauf angeordnet wird.

18. Verfahren nach zumindest einem der vorhergehenden Ansprüche, **dadurch gekennzeichnet, dass** aus dem die Kristallisationsstufe einschliessenden dritten Kreislauf eine Teilmenge dem zweiten Kreislauf zugeführt wird.

19. Anlage zum Herstellen von kugelförmigen Partikeln aus Polymer, insbesondere aus polyfunktionellen Carbonsäuren und Alkoholen, insbesondere zur Herstellung von PET- oder PBT-Pellets, umfassend zumindest ein schmelzflüssiges Prepolymer bzw. Polymer vertropfende Düseneinrichtung (18), einen dieser nachgeordneten Fallturm (20), der über zumindest eine bodenseitige Gaseintrittsöffnung (22, 24) und zumindest einer düseneinrichtungsseitige Austrittsöffnung (27) in einem Gaskreislauf (40) angeordnet ist, eine dem Fallturm nachgeordnete Transporteinrichtung (28, 30) für in dem Fallturm zumindest vorkristallisierte kugelförmige Partikel sowie eine der Transporteinrichtung nachgeordnete Kristallisationsstufe (38), **dadurch gekennzeichnet, dass** die Anlage eine Düsenplatte (18) mit auf einer Fläche verteilten Düsen aufweist, dass der Fallturm (20) in dem Luft führenden Kreislauf (14) angeordnet ist und einen Querschnitt aufweist, der zumindest doppelt so gross wie die Fläche ist, und dass die Anlage einen Schwingungsgeber umfasst, über den die Düsenplatte und/oder das schmelzflüssige Prepolymer bzw. Polymer unmittelbar in Schwingung anregbar ist.

20. Anlage nach zumindest Anspruch 19, **dadurch gekennzeichnet, dass** die Düsen der Düsenplatte (18) auf einer Fläche verteilt sind, die insbesondere 1/4 bzw. 1/3 des Querschnitts des Fallturms (20) entspricht.

21. Anlage nach zumindest einem der Ansprüche 19 oder 20, **dadurch gekennzeichnet, dass** die Düsen auf einer kreisförmigen Fläche mit einem Durchmesser D_{d} verteilt sind, dass der Fallturm einen kreisförmigen Querschnitt mit einem Durchmesser D_{f} aufweist und dass 1,5 D_{d} ≤D_{f}, insbesondere 2,0 D_{d} ≤D_{f} ist.

22. Anlage nach zumindest einem der Ansprüche 19 bis 21, **dadurch gekennzeichnet, dass** sich der Durchmesser der von den Düsen der Düsenplatte (18) gebildeten Fläche zu dem Durchmesser des Fallturms (20) verhält wie D_{d} : D_{f} in etwa 1:2 bis 1:10, insbesondere 1:5.

23. Anlage nach zumindest einem der Ansprüche 19 bis 22, **dadurch gekennzeichnet, dass** in dem Fallturm (20) im Bereich dessen Lufteintrittsöffnung (22, 24) zumindest eine lufteintrittsgeschwindigkeitserhöhende Einrichtung (26) angeordnet ist.

24. Anlage nach zumindest einem der Ansprüche 19 bis 22, **dadurch gekennzeichnet, dass** die Luftaustrittsöffnung (27) in Abstand der Düsenplatte (18) derart verläuft, dass die von der Düsenplatte vertropften Partikel umittelbar nach dem Austritt aus der Düsenplatte einer im Wesentlichen laminaren Luftströmung ausgesetzt sind.

25. Anlage nach zumindest einem der Ansprüche 19 bis 24, **dadurch gekennzeichnet, dass** die im Bodenbereich des Fallturmes (20) angeordnete Transporteinrichtung eine Durchtrittsöffnungen (28) aufweisende schräg verlaufende Ebene (30) wie Sieb oder Lochblech ist, die von trockener Luft derart durchsetzt sind, dass die Partikel schwebend und/oder oszillierend entlang der Ebene (30) bewegbar sind.

26. Anlage nach zumindest einem der Ansprüche 19 bis 25, **dadurch gekennzeichnet, dass** die schräg verlaufende Ebene (30) beabstandet zum Boden (32) des Fallturms (20) verläuft, dass zwischen dem Boden (32) und der schräg verlaufenden Ebene (30) eine erste Lufteintrittsöffnung (24) und oberhalb der schräg verlaufenden Ebene eine zweite Lufteintrittsöffnung (22) des Luftkreislaufes (40) vorgesehen ist.

27. Anlage nach zumindest einem der Ansprüche 19 bis 26, **dadurch gekennzeichnet, dass** der schräg verlaufenden Ebene (30) ein Übergrössenseparator (34) nachgeordnet ist, dem eine mit trockener Luft betriebene Kristallisationsstufe (38) nachgeordnet ist.

28. Anlage nach zumindest einem der Ansprüche 19 bis 27, **dadurch gekennzeichnet, dass** von dem Übergrössenseparator (34) eine abgeschiedene übergrosse Partikel führende Leitung zu einer der Düsenplatte (18) vorgeordneten Vorkondensationsstufe (14) führt.

29. Anlage nach zumindest einem der Ansprüche 19 bis 28, **dadurch gekennzeichnet, dass** eine Teilluftmenge aus dem den Fallturm (20) einschliessenden ersten Luftkreislauf (40) über eine Leitung (48) einer einen zweiten Kreislauf (50) bildenden Reinigungsstufe zuführbar ist.

30. Anlage nach zumindest einem der Ansprüche 19 bis 29, **dadurch gekennzeichnet, dass** die Reinigungstufe ein Sprühkreislauf als der zweite Kreislauf über eine Leitung (58) mit einer Düsenplatte (18) vorgeordneten Veresterungsstufe (12) verbunden ist.

31. Anlage nach zumindest einem der Ansprüche 19 bis 30, **dadurch gekennzeichnet, dass** dem zweiten Kreislauf eine Luftteilmenge mit unkondensierbaren Substanzen einer Wärmeübertragungseinrichtung über eine Leitung (72) zuführbar ist.

32. Anlage nach zumindest einem der Ansprüche 19 bis 31, **dadurch gekennzeichnet, dass** die Kristallisationsstufe (38) in einem mit trockener Luft durchströmten dritten Luftkreislauf (70) angeordnet ist, der mit dem zweiten Kreislauf (50) verbunden ist.

33. Anlage nach zumindest einem der Ansprüche 19 bis 32, **dadurch gekennzeichnet, dass** der zweite Kreislauf (50) über eine Leitung (64) mit der Lufteintrittsöffnung (22, 24) oder oberhalb der Lufteintrittsöffnung, insbesondere oberhalb der Einrichtung (26) unmittelbar mit dem Fallturm (20) verbunden ist.

## Claims

1. Method for the production of spherical particles from a polymer melt, in particular comprising polyfunctional carboxylic acids and alcohols, such as PET or PBT pellets, a molten prepolymer or precondensate or a non-stringy polymer being converted into drops by means of a drop-forming nozzle, the drops being subjected to a countercurrent of a gas for at least partial crystallisation in a drop tower and then being transported to a further post-crystallisation stage, **characterized in that** the molten prepolymer is converted into drops by means of a vibrating nozzle plate and/or by direct vibration of the molten prepolymer or polymer, **in that** drops thus formed are subjected to a countercurrent of air as the gas, the drops being exposed to a laminar air flow immediately after leaving the nozzle plate, and **in that** the air is fed to the drop tower at a temperature T₁ with T₁ < 160°C and above the glass transmission temperature of the prepolymer or polymer melt to be converted into drops.

2. Method according to Claim 1, **characterized in that** the air is fed to the drop tower at a temperature T₁ such that the air is heated to a maximum temperature T₂ ≤ 210°C by heat transfer from the drops.

3. Method according to Claim 1 or 2, **characterized in that** the air is fed to the drop tower at a temperature T₁ ≤ 120°C.

4. Method according to Claim 1 or 2, **characterized in that**, in the production of PET pellets, the air is fed to the drop tower at a temperature such that the air is heated to a maximum temperature T₂ ≤ 160°C by heat transfer from the drops.

5. Method according to Claim 1 or 2, **characterized in that**, in the production of PBT pellets, the air is fed to the drop tower at a temperature such that the air is heated to a maximum temperature T₂ ≤ 140°C by heat transfer from the drops.

6. Method according to Claim 1 or 2, **characterized in that**, in the production of the prepolymer or precondensate, a catalyst which increases the polymerisation rate and is based on titanium oxide is added.

7. Method according to Claim 1 or 2, **characterized in that** the air is fed to the drop tower in the lower region, in particular in the bottom region, of the drop tower.

8. Method according to at least one of the preceding claims, **characterized in that** the velocity of flow towards the drops is higher in the lower region of the drop tower than in the upper region.

9. Method according to at least one of the preceding claims, **characterized in that** air at a dew point temperature Tₜ of in particular -10°C ≤ Tₜ ≤ -40°C is fed to the drop tower.

10. Method according to at least one of the preceding claims, **characterized in that** the air is fed in a first circulation including the drop tower so that a portion is taken off from the first circulation and fed to a second circulation in which reaction substances, such as ethylene glycol or butanediol or oligamers and/or water are removed.

11. Method according to at least one of the preceding claims, **characterized in that** the second circulation is a spray circulation in which ethylene glycol or butanediol is atomised, reaction substances which have condensed in the second circulation being fed to an esterification or transesterification stage upstream of the nozzle plate.

12. Method according to at least one of the preceding claims, **characterized in that** air taken from the first and/or second circulation, with reaction products present therein and uncondensable in the second circulation, such as acetaldehyde or tetrahydrofuran, is fed to a heat-transfer plant.

13. Method according to at least one of the preceding claims, **characterized in that** the at least partly crystallised drops in the bottom region of the drop tower are removed from the drop tower via an inclined plane having passages through which dry air flows.

14. Method according to at least one of the preceding claims, **characterized in that** the drops which have at least partly crystallised to give the spheres are transported in a floating and/or oscillating manner along the inclined plane or at least in the region of the passages present therein.

15. Method according to at least one of the preceding claims, **characterized in that** the drops which have at least partly crystallised to give the spheres are classified after leaving the inclined plane.

16. Method according to at least one of the preceding claims, **characterized in that** the drops which have at least partly crystallised to give the spheres travel from the inclined plane to an oversize separator and particles deposited there are fed to a precondensation stage for the prepolymer.

17. Method according to at least one of the preceding claims, **characterized in that**, after passing through the oversize separator, the particles are fed to a precrystallisation stage which is arranged in a third circulation through which dry air flows.

18. Method according to at least one of the preceding claims, **characterized in that** a portion from the third circulation including the crystallisation stage is fed to the second circulation.

19. Plant for the production of spherical particles from polymer, in particular comprising polyfunctional carboxylic acids and alcohols, in particular for the production of PET or PBT pellets, comprising nozzle device (18) transforming at least one molten prepolymer or polymer into drops, a drop tower (20) which is downstream thereof and is arranged in a gas circulation (40) via at least one bottom gas entrance opening (22, 24) and at least one exit opening (27) on the nozzle device side, a transport device (28, 30) downstream of the drop tower and intended for spherical particles at least precrystallised in the drop tower, and a crystallisation stage (38) downstream of the transport device, **characterized in that** the plant has a nozzle plate (18) having nozzles distributed over an area, **in that** the drop tower (20) is arranged in the air-carrying circulation (14) and has a cross-section which is at least twice as large as the area, and **in that** the plant comprises a vibration generator via which the nozzle plate and/or the molten prepolymer or polymer can be directly vibrated.

20. Plant according to at least Claim 19, **characterized in that** the nozzles of the nozzle plate (18) are distributed over an area which corresponds in particular to a 1/4 or a 1/3 of the cross-section of the drop tower (20).

21. Plant according to at least one of Claims 19 and 20, **characterized in that** the nozzles are distributed over a circular surface having a diameter D_{d}, **in that** the drop tower has a circular cross-section having a diameter D_{f} and **in that** 1.5 D_{d} ≤ D_{f}, in particular 2.0 D_{d} ≤ D_{f}.

22. Plant according to at least one of Claims 20 to 21, **characterized in that** the ratio of the diameter of the area formed by the nozzles of the nozzle plate (18) to the diameter of the drop tower (20), D_{d}:D_{f}, is about 1:2 to 1:10, in particular 1:5.

23. Plant according to at least one of Claims 19 to 22, **characterized in that** at least one device (26) which increases the air entrance velocity is arranged in the drop tower (20) in the region of the air entrance opening (22, 24) thereof.

24. Plant according to at least one of Claims 19 to 22, **characterized in that** the air exit opening (27) runs at a distance from the nozzle plate (18) such that the particles transformed into drops by the nozzle plate are exposed to a substantially laminar air flow immediately after emerging from the nozzle plate.

25. Plant according to at least one of Claims 19 to 24, **characterized in that** the transport device arranged in the bottom region of the drop tower (20) is an inclined plane having passages (28), such as a screen or perforated sheet, through which dry air passes in such a way that the particles can be moved in a floating and/or oscillating manner along the plane (30).

26. Plant according to at least one of Claims 19 to 25, **characterized in that** the inclined plane (30) is a distance away from the bottom (32) of the drop tower (20), and **in that** a first air entrance opening (24) is provided between the bottom (32) and the inclined plane (30) and a second air entrance opening (22) of the air circulation (40) is provided above the inclined plane.

27. Plant according to at least one of Claims 19 to 26, **characterized in that** an oversize separator (34) is arranged downstream of the inclined plane (30), and a crystallisation stage (38) operated with dry air is arranged downstream of said oversize separator.

28. Plant according to at least one of Claims 19 to 27, **characterized in that** a pipe carrying oversize particles which have been separated off leads from the oversize separator (34) to a precondensation stage (14) upstream of the nozzle plate (18).

29. Plant according to at least one of Claims 19 to 28, **characterized in that** a portion of air from the first air circulation (40) including the drop tower (20) can be fed via a pipe (48) to a purification stage forming a second circulation (50).

30. Plant according to at least one of Claims 19 to 29, **characterized in that** the purification stage, a spray circulation as the second circulation, is connected via a pipe (58) to an esterification stage (12) upstream of nozzle plate (18).

31. Plant according to at least one of Claims 19 to 30, **characterized in that** a portion of air comprising uncondensable substances of a heat-transfer device can be fed via a pipe (72) to the second circulation.

32. Plant according to at least one of Claims 19 to 31, **characterized in that** the crystallisation stage (38) is arranged in a third circulation (70) through which dry air flows and which is connected to the second circulation (50).

33. Plant according to at least one of Claims 19 to 32, **characterized in that** the second circulation (50) is connected via a pipe (64) to the air entrance opening (22, 24) or above the air entrance opening, in particular above the device (26), directly to the drop tower (20).

## Revendications

1. Procédé de fabrication de particules sphériques à partir d'une masse fondue de polymère, en particulier à partir d'acides carboxyliques et d'alcools polyfonctionnels, tels que des boulettes de PET ou de PBT, où un prépolymère, ou un précondensat, ou un polymère ne tirant pas de fils, porté à fusion, est formé en gouttes au moyen d'une buse de formation de gouttes, les gouttes sont sollicitées, dans une tour gravitaire, par un contre-courant d'un gaz, pour obtenir au moins une cristallisation partielle et, ensuite, transportées à un autre étage de recristallisation, **caractérisé en ce que** le prépolymère porté à fusion est formé en gouttes au moyen d'une plaque à buses mise en vibration et/ou par excitation directe en vibration du prépolymère ou du polymère porté à fusion, **en ce que** les gouttes ainsi formées sont sollicitées en contre-courant avec de l'air en tant que gaz, les gouttes étant exposées à un écoulement laminaire d'air immédiatement après avoir quitté la plaque à buses, et **en ce que** l'air est amené à la tour gravitaire à une température T₁, avec T₁ < 160°C et supérieure au moins de transition vitreuse de la masse fondue de prépolymère ou de polymère à former en gouttes.

2. Procédé selon la revendication 1, **caractérisé en ce que** l'air est amené à la tour gravitaire à une température T₁, de manière que l'air soit chauffé à une température maximale T₂ s 210°C, de par le transfert thermique venant des gouttes.

3. Procédé selon la revendication 1 ou 2, **caractérisé en ce que** l'air est amené à la tour gravitaire à une température T₁ ≤ 120°C.

4. Procédé selon la revendication 1 ou 2, **caractérisé en ce que**, lors de la fabrication de boulettes en PET, l'air est amené à la tour gravitaire à une température, de manière que l'air soit chauffé à une température maximale T₂ ≤ 160°C, de par le transfert thermique venant des gouttes.

5. Procédé selon la revendication 1 ou 2, **caractérisé en ce que**, lors de la fabrication de boulettes en PBT, l'air est amené à la tour gravitaire à une température, de manière que l'air soit chauffé à une température maximale T₂ ≤ 140°C, de par le transfert thermique venant des gouttes.

6. Procédé selon la revendication 1 ou 2, **caractérisé en ce qu'**un catalyseur à base d'oxyde de titane, augmentant la vitesse de polycondensation, est ajouté lors de la fabrication du prépolymère ou du précondensat.

7. Procédé selon la revendication 1 ou 2, **caractérisé en ce que** l'air est amené à la tour gravitaire, dans la zone inférieure, en particulier dans la zone de fond de la tour gravitaire.

8. Procédé selon au moins l'une des revendications précédentes, **caractérisé en ce que**, dans la zone inférieure de la tour gravitaire, l'écoulement des gouttes arrive à une vitesse supérieure à celle à laquelle il arrive dans la zone supérieure.

9. Procédé selon au moins l'une des revendications précédentes, **caractérisé en ce que** de l'air, à une température de point de rosée Tₜ, avec en particulier -10°C ≤ Tₜ ≤ -40°C, est amené à la tour gravitaire.

10. Procédé selon au moins l'une des revendications précédentes, **caractérisé en ce que** l'air est amené dans un premier circuit, incluant la tour gravitaire, **en ce qu'**une quantité partielle est prélevée du premier circuit et est amenée à un deuxième circuit, dans lequel des substances de réaction, telles que de l'éthylène glycol ou du butandiol, des oligomères et/ou de l'eau, sont éliminées.

11. Procédé selon au moins l'une des revendications précédentes, **caractérisé en ce que** le deuxième circuit est un circuit à pulvérisation, dans lequel est pulvérisé de l'éthylène glycol ou du butandiol, sachant que des substances de réaction, s'étant condensées dans le deuxième circuit, sont amenées à un étage d'estérification ou de transestérification, disposé en amont de la plaque à buses.

12. Procédé selon au moins l'une des revendications précédentes, **caractérisé en ce que** de l'air, prélevé du premier et/ou du deuxième circuit, est amené, avec des produits de réaction incondensables dans le deuxième circuit, contenu dans celui-ci, tels que de l'acétaldéhyde ou du tétrahydrofurane, à une installation de transfert thermique.

13. Procédé selon au moins l'une des revendications précédentes, **caractérisé en ce que** les gouttes, au moins partiellement cristallisées, sont extraites de la tour gravitaire, dans la zone de fond de la tour gravitaire, par un plan incliné, présentant des ouvertures de passage traversées par un écoulement d'air sec.

14. Procédé selon au moins l'une des revendications précédentes, **caractérisé en ce que** les gouttes, au moins partiellement cristallisées en formant les billes, sont transportées en flottant et/ou en oscillant le long du plan incliné ou au moins dans la zone des ouvertures de passage existant dans celui-ci.

15. Procédé selon au moins l'une des revendications précédentes, **caractérisé en ce que** les gouttes, au moins partiellement cristallisées en formant les billes, sont classées après avoir quitté le plan incliné.

16. Procédé selon au moins l'une des revendications précédentes, **caractérisé en ce que** les gouttes, au moins partiellement cristallisées en formant les billes, provenant du plan incliné, arrivent à un séparateur des trop grosses, et les particules séparées à cet endroit sont amenées à un étage de précondensation pour le prépolymère.

17. Procédé selon au moins l'une des revendications précédentes, **caractérisé en ce que**, après passage par le séparateur des trop grosses, les particules sont amenées à un étage de précristallisation, disposé dans un troisième circuit, traversé par un écoulement d'air sec.

18. Procédé selon au moins l'une des revendications précédentes, **caractérisé en ce qu'**une quantité partielle, issue du troisième circuit, incluant l'étage de cristallisation, est amenée au deuxième circuit.

19. Installation pour produire des particules sphériques en polymère, en particulier à partir d'acides carboxyliques et d'alcools polyfonctionnels, en particulier pour la fabrication de boulettes de PET ou de PBT, comprenant au moins un dispositif à buses (18) formant des gouttes liquides de prépolymère ou de polymère, une tour gravitaire (20) installée en aval de celui-ci, disposée dans un circuit de gaz (40), par l'intermédiaire d'au moins une ouverture d'entrée de gaz (22, 24) située(s) côté fond et d'au moins une ouverture de sortie (27) disposée(s) côté dispositif à buses, un dispositif de transport (28, 30) disposé en aval de la tour gravitaire, pour des particules sphériques s'étant au moins partiellement précristallisées dans la tour gravitaire, ainsi qu'un étage de cristallisation (38), disposé en aval du dispositif de transport, **caractérisé en ce que** l'installation présente une plaque à buses (18) munie de buses réparties sur une face, **en ce que** la tour gravitaire (20) est disposée dans le circuit (4) guidant l'air et présente une section transversale faisant au moins le double de l'aire de la face, et **en ce que** l'installation comprend un vibreur, par l'intermédiaire duquel la plaque à buses et/ou le prépolymère ou le polymère liquide est susceptible d'être directement mis en vibration.

20. Installation selon au moins la revendication 19, **caractérisée en ce que** les buses de la plaque à buses (18) sont réparties sur une aire correspondant en particulier à ¼ ou 1/3 de la section transversale de la tour gravitaire (20).

21. Installation selon au moins l'une des revendications 19 ou 20, **caractérisée en ce que** les buses sont réparties sur une aire circulaire de diamètre D_{d}, **en ce que** la tour gravitaire présente une section transversale circulaire de diamètre D_{f}, et **en ce que** 1,5 D_{d} ≤ D_{f}, en particulier 2,0 D_{d} ≤ D_{f}.

22. Installation selon au moins l'une des revendications 19 à 21, **caractérisée en ce que** le rapport, entre le diamètre de l'aire formée par les buses de la plaque à buses (18) et le diamètre de la tour gravitaire (20), est de valeur D_{d} : D_{f}, d'à peu près 1:2 à 1:10, en particulier de 1:5.

23. Installation selon au moins l'une des revendications 19 à 22, **caractérisée en ce qu'**au moins un dispositif (26), augmentant la vitesse d'entrée de l'air, est disposé dans la tour gravitaire (20), dans la zone de son ouverture d'entrée d'air (22, 24).

24. Installation selon au moins l'une des revendications 19 à 22, **caractérisée en ce que** l'ouverture de sortie d'air (27) s'étend à distance de la plaque à buses (18), de manière que les particules formées en gouttes par la plaque à buses soient exposées à un écoulement d'air sensiblement laminaire, directement après la sortie de la plaque à buses.

25. Installation selon au moins l'une des revendications 19 à 24, **caractérisée en ce que** le dispositif de transport, disposé dans la zone de fond de la tour gravitaire (20), est un plan (30) oblique, tel qu'un tamis ou une tôle perforée, présentant des ouvertures de passage (28) traversées par de l'air sec, de manière que les particules soient déplaçables le long du plan (30), en flottant ou en oscillant.

26. Installation selon au moins l'une des revendications 19 à 25, **caractérisée en ce que** le plan (30) oblique s'étend à distance du fond (32) de la tour gravitaire (20), **en ce que**, entre le fond (32) et le plan (30) oblique, est prévue une première ouverture d'entrée d'air (24) et, au-dessus du plan oblique, une deuxième ouverture d'entrée d'air (22) du circuit d'air (40).

27. Installation selon au moins l'une des revendications 19 à 26, **caractérisée en ce qu'**en aval du plan (30) oblique est disposé un séparateur des trop grosses (34), en aval duquel est disposé un étage de cristallisation (38) fonctionnant à l'air sec.

28. Installation selon au moins l'une des revendications 19 à 27, **caractérisée en ce qu'**une conduite, guidant une particule trop grosse séparée, venant du séparateur des trop grosses (34), mène à un étage de précondensation (14), disposé en amont de la plaque à buses (18).

29. Installation selon au moins l'une des revendications 19 à 28, **caractérisée en ce qu'**une quantité partielle d'air, provenant du premier circuit d'air (40) incluant la tour gravitaire (20), est susceptible d'être amenée, par une conduite (48), à un étage d'épuration, formant un deuxième circuit (50).

30. Installation selon au moins l'une des revendications 19 à 29, **caractérisée en ce que** l'étage d'épuration est un circuit à pulvérisation réalisé sous forme de deuxième circuit et relié, par une conduite (58), à une plaque à buses (18) de l'étage d'estérification (12) installé en amont.

31. Installation selon au moins l'une des revendications 19 à 30, **caractérisée en ce qu'**une quantité d'air partielle, comprenant des substances incondensables, est extraite du deuxième circuit et peut être amenée, par une conduite (72), à un dispositif de transfert thermique.

32. Installation selon au moins l'une des revendications 19 à 31, **caractérisée en ce que** l'étage de cristallisation (38) est disposé dans un troisième circuit d'air (70), traversé par un écoulement d'air sec et relié au deuxième circuit (50).

33. Installation selon au moins l'une des revendications 19 à 32, **caractérisée en ce que** le deuxième circuit (50) est relié, par une conduite (64), à l'ouverture d'entrée d'air (22, 24), ou directement relié à la tour gravitaire (20), au-dessus de l'ouverture d'entrée d'air, en particulier au-dessus du dispositif (26).
